# EUROPEAN PATENT SPECIFICATION

(11) **EP 4 117 960 B1**
(45) Date of publication and mention of the grant of the patent: **20.05.2026**
(21) Application number: 21727390.3
(22) Date of filing: 14.05.2021
(51) Int. Cl.: B60N 2/28

(54) **CARRYCOT TO BE DETACHABLY MOUNTED ON A BASE BEING DISMOUNTABLY ATTACHED IN A VEHICLE OR ON A STROLLER FRAME**
BABY TRAGESCHALE ZUM LÖSBAREN BEFESTIGEN AN EINEM IN EINEM FAHRZEUG LÖSBAR BEFESTIGBAREN TRÄGER ODER AN EINEM KINDERWAGENRAHMEN
NACELLE POUR LA FIXATION AMOVIBLE SUR UN SUPPORT QUI EST MONTÉ DE FAÇON AMOVIBLE DANS UN VÉHICULE OU SUR LE CADRE D'UNE POUSSETTE

(30) Priority: 14.05.2020 CN 202010406344; 10.05.2021 CN 202110504697
(43) Date of publication of application: 18.01.2023
(60) Divisional application: 26171595.7
(73) Proprietor: Bambino Prezioso Switzerland AG, 6312 Steinhausen (CH)
(72) Inventor: CHEN, Yingzhong, Dongguan, Guangdong 523000 (CN)
(74) Representative: Pfenning, Meinig & Partner mbB
(86) International application number: PCT/EP2021/062822
(87) International publication number: WO 2021/229051

(56) References cited:
- EP-A2- 2 272 734
- WO-A1-2017/103122
- WO-A1-2017/118667
- WO-A1-2018/007243

## Description

### Field of the Invention

The present invention relates to a carrycot according to the precharacterizing portion of claim 1, as well as a carrycot structure and a child carrier according to claims 12 and 14.

### Background of the Invention

Carrycots are one of juvenile products that can be installed on strollers or vehicle seats to provide comfortable and safe sleeping environments for children, and to help caregivers to look after the children. However, conventional carrycots cannot be used universally. In other words, the carrycots designed for strollers cannot be installed on vehicle seats, and the carrycots designed for vehicle seats cannot be installed on strollers. Therefore, the caregivers would need different carrycots in different situations, this is inconvenient for the caregivers. Furthermore, most of the conventional carrycots have complicated structure and difficult attachment and detachment operations. Therefore, they are not easy to use.

For example, WO2018007243A1 relates to a cradle for transporting a recumbent child, intended to be attached to a seat of a motor vehicle. The cradle comprises: a frame comprising a plurality of uprights extending from a base and linked at the top end of same by cross members, thus delimiting a plurality of openings; and an inner casing arranged inside said frame, forming the inner walls of said cradle and having protuberances that fill at least one of said openings of said frame.

WO 2017/103122A1 relates to a cradle for transporting a recumbent child, intended to be attached via means for securing to a seat of a motor vehicle. The cradle includes at least two portions such that, when the cradle is attached to the base: a first portion, which supports the feet of the child, extends substantially above the seat, a second portion, which supports the head of the child, extends substantially beyond the seat. According to the invention, the cradle includes an inner frame on which an outer shell is mounted, the inner frame having a reinforced asymmetrical structure in the second portion.

WO 2017/118667A1 relates to equipment for transporting a child in a vehicle, comprising a base intended to be secured to a seat of the vehicle and a cradle accommodating the child in the lying-down position in the longitudinal direction of the cradle, and which can be secured to the base, the cradle and the base comprising guide elements of complementary shapes allowing the translational guidance to be performed between the cradle and the base in a direction of translational movement substantially parallel to the longitudinal direction of the cradle.

EP2272734A2 relates to a stroller frame having two opposite side frames, two first connecting devices disposed respectively on the two side frames of the stroller frame, a first removable seat including a seat body and two second connecting devices disposed respectively on two sides of the seat body of the first removable seat, a second removable seat including a seat body, and two third connecting devices disposed respectively on two sides of the seat body of the second removable seat. The first connecting devices are selectively and respectively connected with the second connecting devices or the third connecting devices so as to selectively mount the first removable seat or the second removable seat to the stroller frame

### Summary of the Invention

Therefore, the present invention aims to provide a carrycot that has a universal design adapted for a stroller and a vehicle seat. The present invention aims to provide a carrycot structure that has simple structure and is adapted for various vehicle seats. The present invention aims to provide a child carrier having the carrycot. The present invention also aims to provide a carrycot with an integral design.

This is achieved by a carrycot according to claim 1, a carrycot structure according to claim 12 and a child carrier according to claim 14.The dependent claims pertain to corresponding further developments and improvements.

Optionally, the mounting bracket is partially embedded into the carrycot body.

Optionally, the second connecting assembly includes a plurality of fixing blocks and a plurality of engaging components. The plurality of fixing blocks protrude from the mounting bracket. Each of the plurality of engaging components is disposed between corresponding two of the plurality of fixing blocks and for detachably engaging with the second carrier frame, and each of the plurality of fixing blocks is for guiding the corresponding engaging component to detachably engage with the second carrier frame.

Optionally, a slanted surface is on an end of each of the plurality of fixing blocks away from the corresponding engaging component and for guiding the corresponding engaging component to detachably engage with the second carrier frame, and a smooth transition area is between a bottom surface of each of the plurality of fixing blocks and the corresponding slanted surface.

Optionally, the plurality of fixing blocks and the mounting bracket are integrally formed with each other.

Optionally, each of the plurality of engaging components is a rod-shaped structure.

Optionally, at least one supporting block protrudes from an end of the mounting bracket away from the plurality of fixing blocks, and the at least one supporting block and the plurality of fixing blocks are for supporting the carrycot body on a horizontal surface cooperatively.

Optionally, at least one first shoulder strap hole and at least one first crotch strap hole are on the carrycot body. At least one second shoulder strap hole and at least one second crotch strap hole are on the mounting bracket. The at least one first shoulder strap hole and the at least one second shoulder strap hole allow a shoulder strap to pass through and are aligned with each other, and the at least one first crotch strap hole and the at least one second crotch strap hole allow a crotch strap to pass through and are aligned with each other.

Optionally, at least one first through hole is on the carrycot body. At least one second through hole is on the mounting bracket, and the at least one first through hole and the at least one second through hole are aligned with each other.

Optionally, the carrycot further includes a handle movably disposed on the carrycot body.

Optionally, the carrycot body is made of foam material.

Optionally, the mounting bracket is made of Polypropylene (PP).

Besides, a carrycot structure according to claim 12 is adapted to be installed on a vehicle seat. The carrycot structure includes a base and the carrycot of one of the aforementioned examples, and the carrycot is detachably installed on the base by the second connecting assembly.

Optionally, a plurality of locking components protrude from the base and are for cooperating with the plurality of engaging components respectively, and a locking slot is on each of the plurality of locking components and for engaging with the corresponding engaging component.

Optionally, at least one restraining block protrudes from the base and is located on at least one side of at least one of the plurality of fixing blocks, and the at least one restraining block is for abutting against the corresponding fixing block for restraining a movement of the carrycot relative to the base.

Furthermore, a child carrier according to claim 14 includes a carrier frame and the carrycot of the aforementioned embodiment, and the carrycot is detachably installed on the carrier frame, wherein the carrier frame includes a cooperating component for cooperating with the first connecting assembly, and the carrycot is detachably installed on the carrier frame by a cooperation of the first connecting assembly and the cooperating component, wherein the carrier frame is a stroller frame or a crib frame.

Comparing with the prior art, the carrycot provided by the present invention not only has simple structure but also can be adapted for various carrier frames, such as bases installed on vehicle seats, stroller frames or crib frames. Therefore, the carrycot provided by the present invention is versatile. Furthermore, in the present invention, when the child carrier or the vehicle travels over a bumpy road, the mounting bracket made of hard material can bear the impact force, and the carrycot made of foam material can buffer the impact force for preventing excessive vibration. Furthermore, the carrycot made of foam material also can absorb noise. Thus, the structure of the carrycot provided by the present invention is stable, compact, and lightweight, and the carrycot provided by the present invention can provide a comfortable and safe environment for the child.

These and other objectives of the present invention will no doubt become obvious to those of ordinary skill in the art after reading the following detailed description of the preferred example that is illustrated in the various figures and drawings.

### Brief Description of the Drawings

In the following, the invention is further illustrated by way of example, taking reference to the accompanying drawings. Thereof
FIG. 1 is a diagram of a carrycot according to a first example of the present invention,
FIG. 2 is a partial view of a second connecting assembly according to the first example of the present invention,
FIG. 3 is a diagram of the carrycot in another view according to the first example of the present invention,
FIG. 4 and FIG. 5 are diagrams of a carrycot structure in different views according to the first example of the present invention,
FIG. 6 is a diagram of a base according to the first example of the present invention,
FIG. 7 is a diagram of a child carrier according to a second illustrative example,
FIG. 8 is a diagram of a carrycot according to the second example,
FIG. 9 is a sectional view of the carrycot according to the second example,
FIG. 10 is an enlarged view of an A portion of the carrycot shown in FIG. 9 according to the second example,
FIG. 11 is another sectional view of the carrycot according to the second example,
FIG. 12 is a diagram of a mounting bracket according to the second example,
FIG. 13 is an enlarged view of a B portion of the mounting bracket shown in FIG. 12 according to the second, and
FIG. 14 is an enlarged view of a C portion of the mounting bracket shown in FIG. 12 according to the second example.

### Detailed Description

In the following detailed description of the preferred examples, reference is made to the accompanying drawings which form a part hereof, and in which is shown by way of illustration specific examples in which the invention may be practiced. In this regard, directional terminology, such as "top", "bottom", "right", "left", "front", "back", etc., is used with reference to the orientation of the Figure(s) being described. The components of the present invention can be positioned in a number of different orientations. As such, the directional terminology is used for purposes of illustration and is in no way limiting. Accordingly, the drawings and descriptions will be regarded as illustrative in nature and not as restrictive. Also, the term "connect" is intended to mean either an indirect or direct mechanical connection. Thus, if a first device is connected to a second device, that connection may be through a direct mechanical connection, or through an indirect mechanical connection via other devices and connections.

In order to illustrate technical specifications and structural features as well as achieved purposes and effects of the present invention, relevant examples and figures are described as follows.

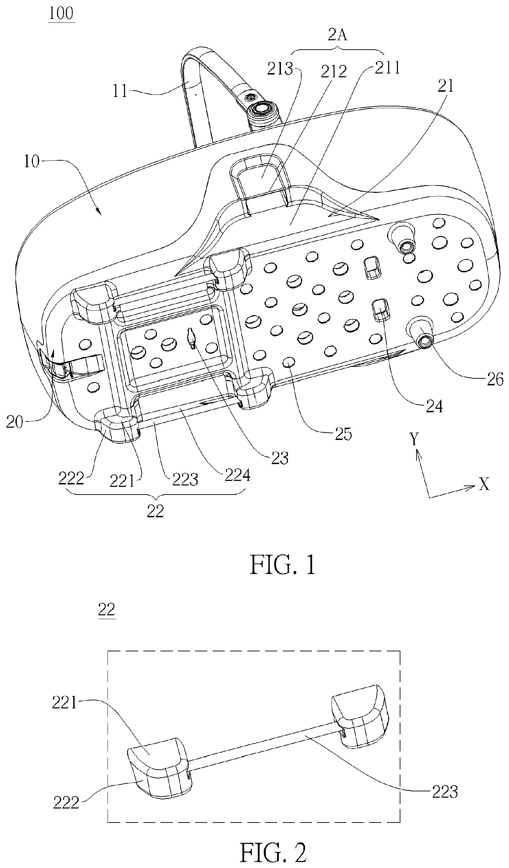

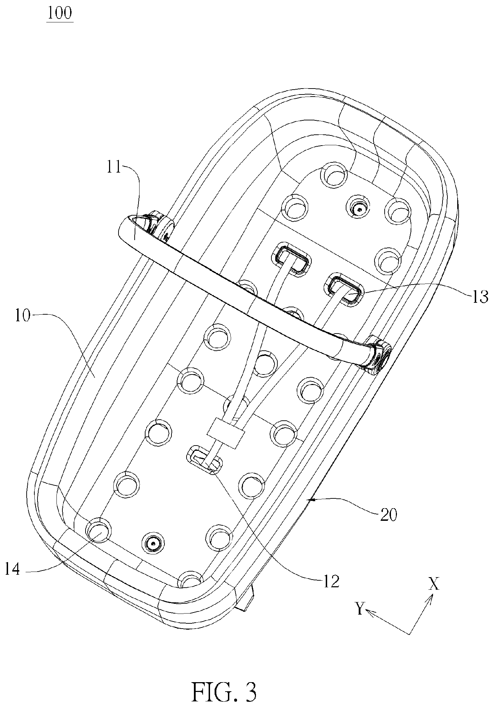

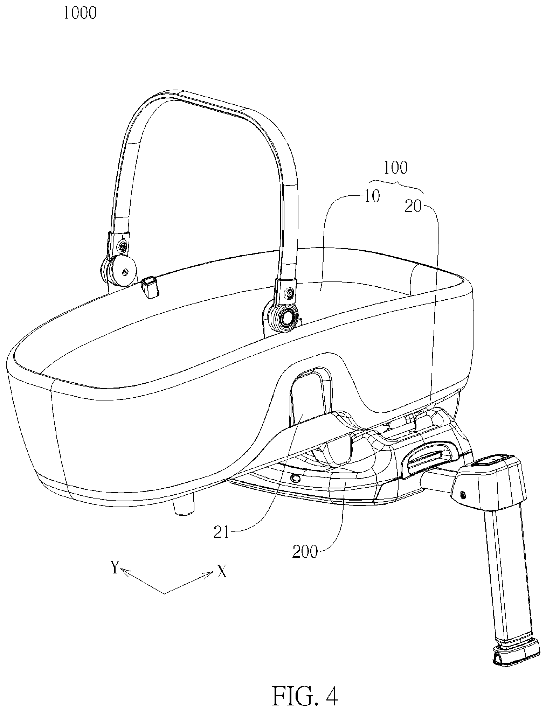

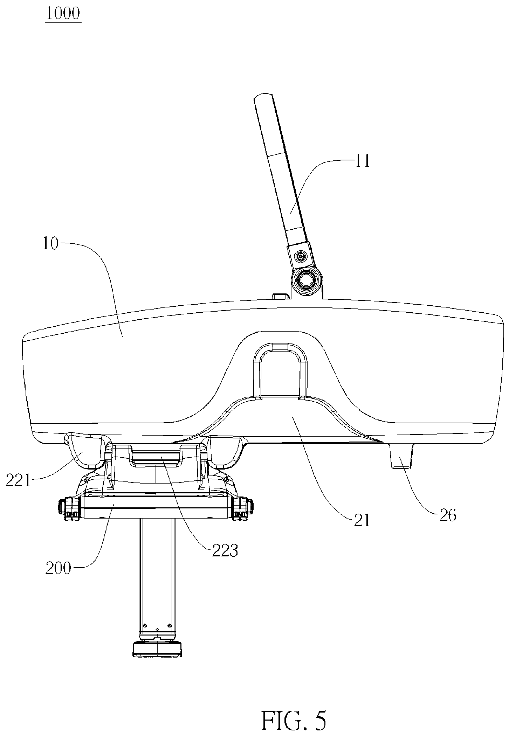

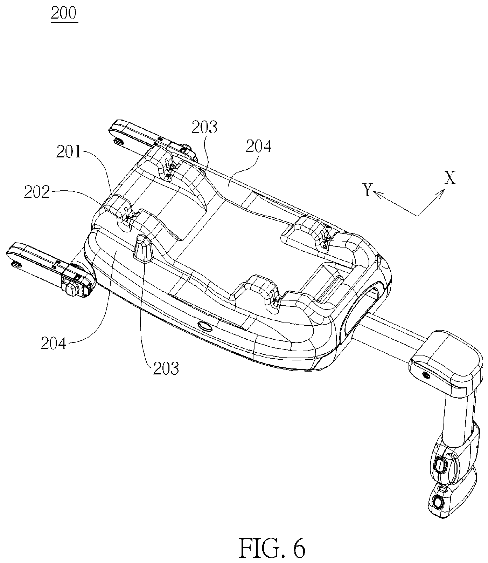

Please refer to FIG. 1 to FIG. 6. FIG. 1 is a diagram of a carrycot 100 according to a first example of the present invention. FIG. 2 is a partial view of a second connecting assembly 22 according to the first example of the present invention. FIG. 3 is a diagram of the carrycot 100 in another view according to the first example of the present invention. FIG. 4 and FIG. 5 are diagrams of a carrycot structure 1000 in different views according to the first example of the present invention. FIG. 6 is a diagram of a base 200 according to the first example of the present invention. As shown in FIG. 1 to FIG. 6, the carrycot structure 1000 includes the carrycot 100 and the base 200. The base 200 can be detachably connected to any vehicle seat, such as a car seat, a ship seat or an aircraft seat. The carrycot 100 can be detachably installed on the base 200. The carrycot 100 includes a carrycot body 10, a mounting bracket 20, a first connecting assembly 21 and the second connecting assembly 22. The mounting bracket 20 is disposed on an outer surface of the carrycot body 10. The first connecting assembly 21 and the second connecting assembly 22 can be detachably connected to a first carrier frame and a second carrier frame, respectively. Specifically, the first connecting assembly 21 is disposed on the mounting bracket 20 and for detachably connecting the carrycot 100 to the first carrier frame, such as a stroller frame or a crib frame. The second connecting assembly 22 is disposed on the mounting bracket 20 and for detachably connecting the carrycot 100 to the second carrier frame, such as the base 200. However, the present invention is not limited to this example. For example, in another example, the first connecting assembly can be disposed on the carrycot body.

As shown in FIG. 1, in order to make an overall structure more stable and more compact, the mounting bracket 20 covers a bottom portion of the carrycot body 10 and partially covers a lateral portion of the carrycot body 10. Specifically, an upper edge of the mounting bracket 20 is embedded into the lateral portion of the carrycot body 10, so that the carrycot body 10 covers the upper edge of the mounting bracket 20. However, the present invention is not limited to this example.

Furthermore, as shown in FIG. 1, in order to make the structure of the carrycot 100 more stable, more compact and lighter, and to enable the carrycot 100 to provide a comfortable and safe environment for a child, the carrycot body 10 can be made of foam material, and the mounting bracket 20 can be made of hard material. The mounting bracket 20 covers the bottom portion of the carrycot body 10, and the mounting bracket 20 and the carrycot body 10 can form an integral structure cooperatively. When the carrycot 100 is independently used, the mounting bracket 20 made of hard material can support the carrycot body 10 stably. When the carrycot 100 is installed on the base 200 or another carrier frame, the mounting bracket 20 made of hard material can bear an impact from a collision or when travelling over a bumpy road, and the carrycot body 10 made of foam material can buffer the impact force to prevent excessive vibration. Besides, the carrycot body 10 made of foam material also can absorb noise. Therefore, the structure of the carrycot 100 is stable, compact, and lightweight, and the carrycot 100 can provide the comfortable and safe environment for the child. The mounting bracket 20 can be made of Polypropylene (PP), so that the mounting bracket 20 has a better structural strength. The carrycot body 10 can be made of Expanded Polystyrene (EPS), Expanded Polypropylene (EPP), Expanded Polyolefin (EPO), Expanded Polyethylene (EPE) or a composite material including of at least one of the aforementioned material. The carrycot body 10 can be combined with the mounting bracket 20 by using an adhesive, such as glue, by hot melting, by foam molding, or by a connecting element, such as a screw. A ratio of a weight of the carrycot body 10 to a weight of the mounting bracket 20 can be 1:5, 2:5, 3:5, 4:5 or 1:1.

As shown in FIG. 1 and FIG. 3, two first shoulder strap holes 13 and a first crotch strap hole 12 are on the carrycot body 10 and can respectively allow a shoulder strap and a crotch strap of a harness to pass through. Two second shoulder strap holes 24 and a second crotch strap hole 23 are on the mounting bracket 20 and can respectively allow the shoulder strap and the crotch strap of the harness to pass through. The two first shoulder strap holes 13 are aligned with the two second shoulder strap holes 24 respectively, so that the shoulder strap can pass through the two first shoulder strap holes 13 and the two second shoulder strap holes 24, therefore the shoulder straps could easily stretch into an interior of the carrycot body 10. The first crotch strap hole 12 is aligned with the second crotch strap hole 23, so that the crotch strap can pass through the first crotch strap hole 12 and the second crotch strap hole 23, therefore the crotch straps could easily stretch into the interior of the carrycot body 10. With the aforementioned configurations, the present invention can provide a comfortable and safe environment for a child inside the carrycot body 10. However, the numbers of the first shoulder strap hole, the second shoulder strap hole, the first crotch strap hole, and the second crotch strap hole are not limited to this example, and the numbers would depend on practical designs of the shoulder strap and the crotch strap. For example, in another example, there can be only one first shoulder strap hole on the mounting bracket and only one second shoulder strap hole on the carrycot body. Alternatively, in another example, there can be two first crotch strap holes on the mounting bracket and two second crotch strap holes on the carrycot body.

In addition, as shown in FIG. 1 and FIG. 3, at least one first through hole 14 is on the carrycot body 10. At least one second through hole 25 is on the mounting bracket 20. The at least one first through hole 14 is aligned with the at least one second through hole 25. The aforementioned configuration can not only provide the carrycot 100 with ventilation and breathability to improve the comfort of the child, but also reduce the weight of the carrycot 100 for easier to use and transportation.

Furthermore, as shown in FIG. 1 to FIG. 6, the carrycot 100 further includes a handle 11 movably disposed on the carrycot body 10. By the configuration of the handle 11, a user can carry or transport the carrycot 100 with the child easily by holding the handle 11, or pivotally fold the handle 11 to abut against the carrycot body 10 for reducing a space of the carrycot 100 when it is not required to carry or transport the carrycot 100. However, the structure of the handle is not limited to this example. For example, in another example, the handle can be movably and directly connected to the mounting bracket.

As shown in FIG. 1, FIG. 4 and FIG. 5, the first connecting assembly 21 includes two engaging slot structures 2A. A width of a lower portion of each of the engaging slot structures 2A is greater than a width of an upper portion of each of the engaging slot structures 2A, so that two cooperating components of the first carrier frame can be guided to engage with the two engaging slot structures 2A respectively.

As shown in FIG. 1, FIG. 4 and FIG. 5, in order to make the connection of the carrycot 100 and the first carrier frame more stable, each of the engaging slot structures 2A includes a first portion 211 and a second portion 213 connected to the first portion 211. An engaging portion 212 is on the second portion 213 and for engaging with a portion of the corresponding cooperating component of the first carrier frame. Specifically, the second portion 213 is located adjacent to a top side of the first portion 211, and a width of the first portion 211 gradually decreases from bottom to top, so that each of the cooperating components can be guided to move toward the corresponding second portion 213 to allow the portion of the corresponding cooperating component to enter into and engage with the corresponding engaging portion 212 smoothly. With the aforementioned configuration, the carrycot 100 can be stably connected to the first carrier frame and cannot be disengaged from the first carrier frame easily. The two engaging slot structures 2A can be located at a lateral portion of the mounting bracket 20 corresponding to the lateral portion of the carrycot body 10 and opposite to each other, so as to make the connection of the carrycot 100 and the first carrier frame much more stable.

As shown in FIG. 1 and FIG. 2, the second connecting assembly 22 includes four fixing blocks 221 and two engaging components 223. The four fixing blocks 221 protrude from a surface of the mounting bracket 20 away from the carrycot 10. Each of the engaging components 223 is disposed between the two corresponding fixing blocks 221 and for detachably engaging with the base 200. The four fixing blocks 221 can facilitate the engagement between the two engaging components 223 and the base 200, so that the engagement between the two engaging components 223 and the base 200 is convenient. However, the numbers of the fixing block and the engaging component are not limited to this example, and the numbers would depend on practical design.

Specifically, as shown in FIG. 1 and FIG. 2, a slanted surface 222 is on an end of each of the fixing blocks 221 away from the corresponding engaging component 223 and for guiding the corresponding engaging component 223 to detachably engage with the base 200. A smooth transition area can be between a bottom surface of each of the fixing blocks 221 and the corresponding slanted surface 222, so as to optimize the aforementioned guiding process.

As shown in FIG. 1 and FIG. 2, in order to make the overall structure more stable and simplify the manufacturing process, the fixing blocks 221 and the mounting bracket 20 can be integrally formed with each other. However, the present invention is not limited to this example. In another example, the fixing block and the mounting bracket can be independently formed and combined with each other by an engaging element or a screw element.

Besides, specifically, as shown in FIG. 1 and FIG. 2, each of the engaging components 223 can be a rod-shaped structure integrally formed with the corresponding fixing blocks 221. However, the present invention is not limited to this example. In another example, the engaging component and the fixing block can be independently formed and then combined with each other by an engaging element or a screw element. Alternatively, in another example, the engaging component can be formed in another shape. For example, the engaging component can be an engaging block with an engaging recess.

Furthermore, as shown in FIG. 6, two locking components 201 protrude from the base 200 and for respectively cooperating with the two engaging components 223. A locking slot 202 is on each of the locking components 201 and for engaging with the corresponding engaging component 223. Each of the locking components 201 can be a protruding structure, and each of the locking slots 202 can be a recess structure. Each of the engaging components 223 protrudes from the mounting bracket 20, and a gap 224 is between each of the engaging components 223 and the mounting bracket 20 and for partially accommodating the corresponding locking component 201. The aforementioned configuration can make the engagement between the engaging components 223 and the base 200 more convenient. However, the number of the locking component is not limited to this example. For example, in another example, there can be only one locking component protruding from the base.

As shown in FIG. 1 and FIG. 3 to FIG. 6, a longitudinal direction of the base 200 can be parallel to a travelling direction of the vehicle. An extending direction of each of the locking slots 202 can be parallel to a transverse direction of the base 200, which is perpendicular to the longitudinal direction of the base 200. A longitudinal direction of each of the engaging components 223 can be parallel to a longitudinal direction of the carrycot body 10 and perpendicular to the longitudinal direction of the base 200. Therefore, when the carrycot 100 is installed on the base 200, the longitudinal direction of the carrycot body 10 can be perpendicular to the longitudinal direction of the base 200 and the travelling direction of the vehicle, and a wall of the carrycot body 10 extending along the longitudinal direction of the carrycot body 10 can be parallel to a backrest of the vehicle seat, so as to allow the wall extending along the longitudinal direction of the carrycot body 10 to better protect the child when an impact takes place.

Moreover, as shown in FIG. 1 and FIG. 3 to FIG. 6, two restraining blocks 203 protrude from the base 200 and for restraining the movement of the carrycot 100 relative to the 200. Specifically, when each of the engaging components 223 engages with the corresponding locking slot 202, each of the locking components 201 can abut against the corresponding restraining fixing blocks 221 along a first direction X, and each of the restraining blocks 203 can abut against the corresponding restraining fixing blocks 221 along a second direction Y, so as to restrain each of the engaging components 223 from moving relative to the corresponding locking slot 202 along the first direction X and the second direction Y. The first direction X can be perpendicular to the second direction Y. Specifically, the first direction X can be parallel to the longitudinal direction of the carrycot body 10, i.e., a longitudinal direction of the carrycot 100, and the transverses direction of the base 200. The second direction Y can be parallel to a transverse direction of the carrycot body 10, i.e., a transverse direction of the carrycot 100, which is perpendicular to the longitudinal direction of the carrycot body 10, and the longitudinal direction of the base 200.

As shown in FIG. 6, two smooth curved surfaces 204 are on the base 200, and each of the smooth curved surfaces 204 is for cooperating with the slanted surface 222 of the corresponding fixing block 221, so as to guide each of the engaging components 223 to engage with the corresponding locking slot 202. Furthermore, the smooth curved surfaces 204 also can prevent wear damage of the fixing blocks 221 for extending a service life of the carrycot 100.

Besides, as shown in FIG. 1 and FIG 2, two supporting blocks 26 protrude from an end of the mounting bracket 20 away from the four fixing blocks 221. A height of each of the supporting blocks 26 from the mounting bracket 20 is equal to a height of each of the fixing blocks 221 from the mounting bracket 20, so that the supporting blocks 26 and the fixing blocks 221 can cooperatively support the carrycot body 10 on a horizontal surface. When the carrycot 100 is independently used, e.g., when the carrycot 100 is placed on a ground or a desktop, the aforementioned configuration is to prevent the carrycot body 10 from unintentional tipping and affecting the child within the carrycot body 10. However, the number of the supporting block is not limited to this example. For example, in another example, there can be only one supporting block protruding from the mounting bracket.

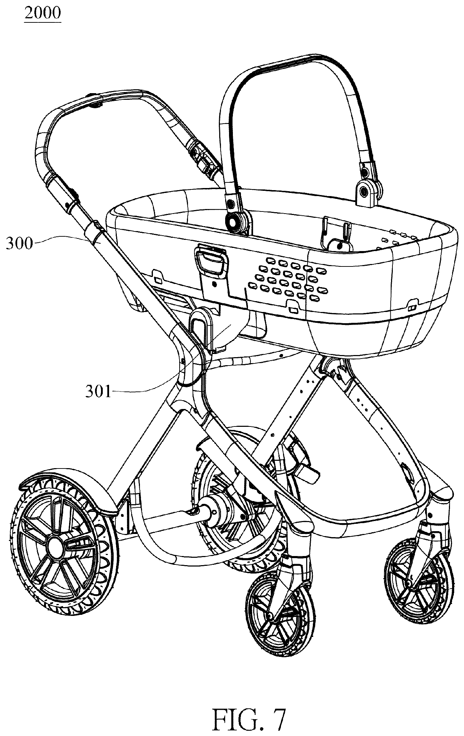

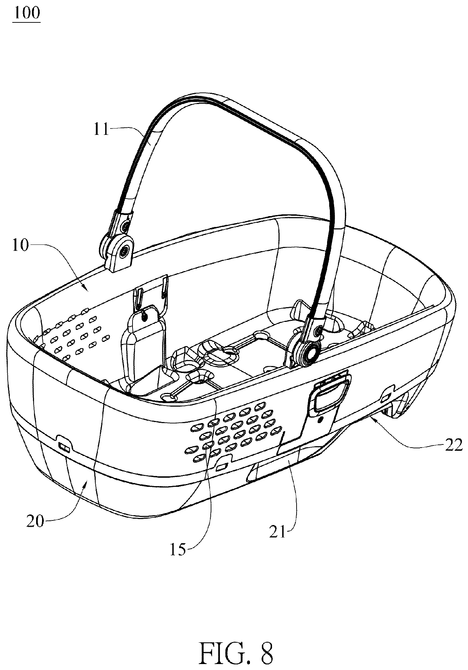

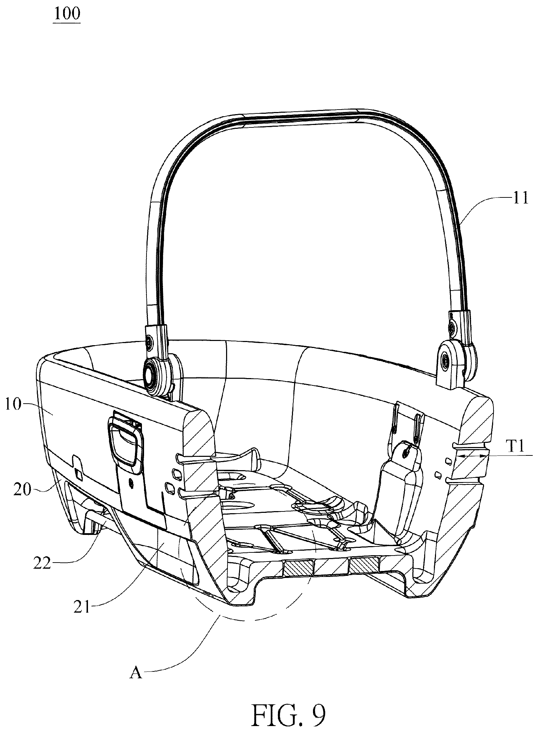

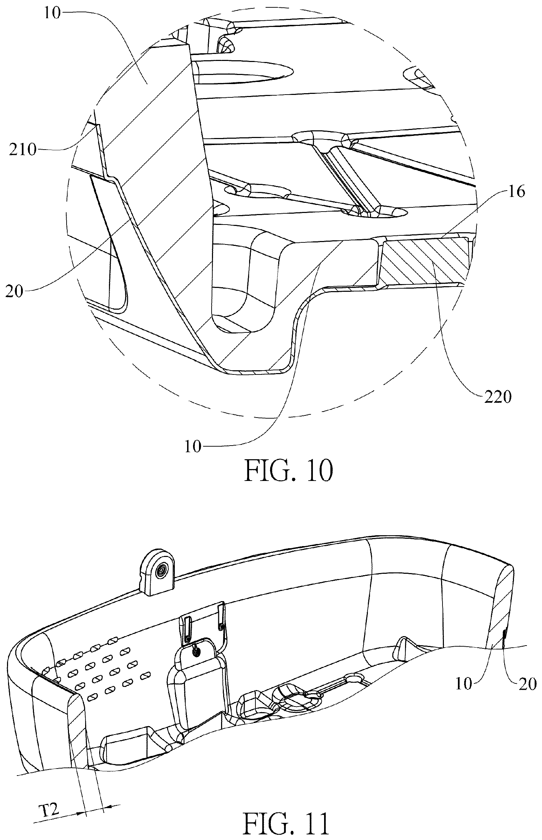

Please further refer to FIG. 7 to FIG. 11. FIG. 7 is a diagram of a child carrier 2000 according to a second example. The second example is provided for illustrative purposes only and does not constitute part of the claimed invention. Where it is expressly indicated that features of the second example may be transferred to the first example, such transfer shall be deemed to be part of the disclosure. FIG. 8 is a diagram of a carrycot 100 according to the second example of the present invention. FIG. 9 is a sectional view of the carrycot 100 according to the second example of the present invention. FIG. 10 is an enlarged view of an A portion of the carrycot 100 shown in FIG. 9 according to the second example of the present invention. FIG. 11 is another sectional view of the carrycot 100 according to the second example of the present invention. As shown in FIG. 7 to FIG. 11, the child carrier 200 includes the carrycot 100 and a carrier frame 300. The carrier frame 300 includes at least one cooperating components 301 for cooperating with the first connecting assembly 21. The carrycot 100 can be detachably installed on the carrier frame 300 by a cooperation of the first connecting assembly 21 and the at least one cooperating components 301.

In this example, the carrycot 100 includes the carrycot body 10, the mounting bracket 20, the first connecting assembly 21 and the second connecting assembly 22. The carrycot body 10 is made of foam material, such as EPS, EPP, EPO or EPE. The mounting bracket 20 is made of hard material, such as PP. The ratio of the weight of the carrycot body 10 to the weight of the mounting bracket 20 can be 1:5, 2:5, 3:5, 4:5 or 1:1. The mounting bracket 20 is partially embedded in to the carrycot body 10 and covers the bottom portion of the carrycot body 10. The mounting bracket 20 and the carrycot body 10 cooperatively form an integral structure. The first connecting assembly 21 and the second connecting assembly 22 are disposed on the mounting bracket 20 and for detachably connecting the carrycot 100 to the first carrier frame, such as the carrier frame 300 of this example, and the second carrier frame, such as the base 200 of the first example, respectively.

As shown in FIG. 8, in this example, the at least one first through hole is on the carrycot body, and at least one third through hole 15 different from the at least one first through hole is on the carrycot body 10. A size of the third through hole 15 is less than a size of the first through hole. The third through hole 15 is located on a part of the lateral portion of the carrycot body 10 which is not covered by the mounting bracket 20, so that the carrycot body 10 can be lighter and more breathable. However, the present invention is not limited to this example. For example, in another example, there can be a plurality of third through holes arranged on a bottom wall and a lateral wall of the carrycot body evenly or disposed on the bottom wall and a portion of the lateral wall of the carrycot body. Understandably, the third through hole can also be configured to form on the carrycot body 10 of the first example.

As shown in FIG. 9 and FIG. 10, in this example, a thickness of the lateral portion of the mounting bracket 20 can be less than a thickness of the lateral portion of the carrycot body 10, so that the carrycot 100 can be much lighter. Understandably, the carrycot 100 of the first example can be configured to have the mounting bracket 20 with the thinner lateral portion and the carrycot body 10 with thicker lateral portion.

As shown in FIG. 9 and FIG. 11, in this example, the wall extending along the longitudinal direction of the carrycot 10 is the structure for bearing the impact. Therefore, a first wall thickness T1 of the wall of the carrycot body 10 extending along the longitudinal direction of the carrycot body 10 is greater than a second wall thickness of the wall of the carrycot body 10 extending along the transverse direction of the carrycot body 10, so as to improve an impact bearing ability for protecting the child. Understandably, the carrycot 100 of the first example can be configured to have different wall thicknesses between the longitudinal direction and the transverse direction.

As shown in FIG 10, in this example, the mounting bracket 20 includes an upper edge 210 embedded into and covered by the lateral portion of the carrycot body 10 and further includes at least one protruding portion 220. At least one recess portion 16 is on the bottom portion of the carrycot body 10 and for cooperating with the at least one protruding portion 220. The at least one protruding portion 220 can be embedded into the at least one recess portion 16, so as to make the connection of the mounting bracket 20 and the carrycot body 10 more stable. Understandably, the carrycot 100 of the first example also can be configured to have the protruding portion and the recess portion.

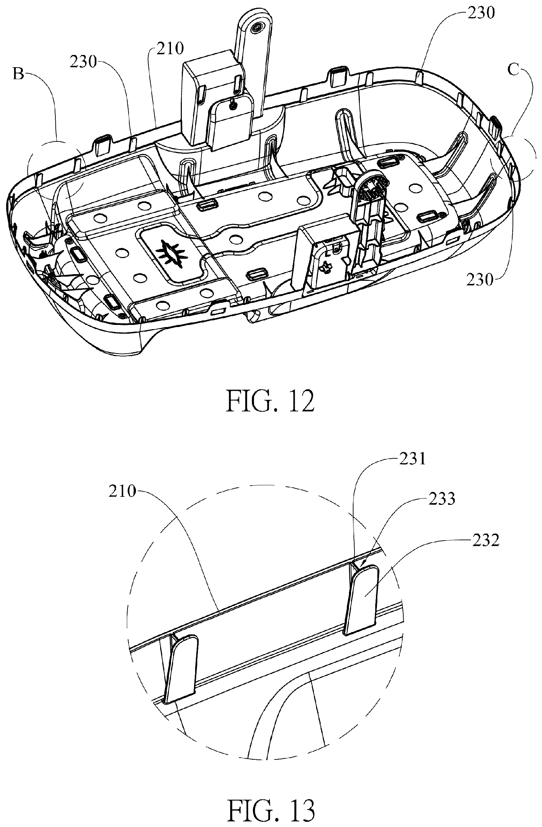

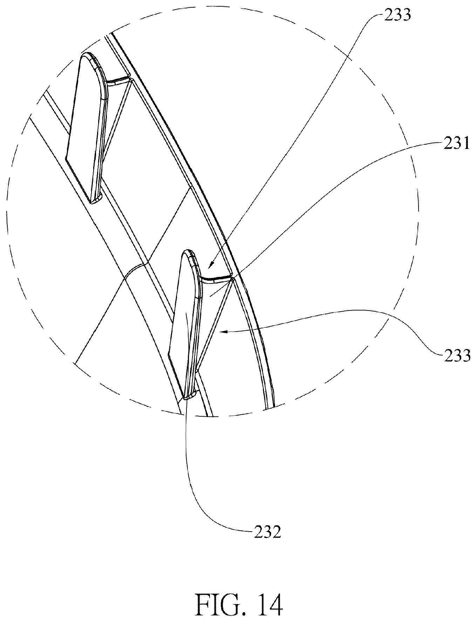

Please refer to FIG. 12 to FIG. 14. FIG. 12 is a diagram of the mounting bracket 20 according to the second example of the present invention. FIG. 13 is an enlarged view of a B portion of the mounting bracket 20 shown in FIG. 12 according to the second example of the present invention. FIG. 14 is an enlarged view of a C portion of the mounting bracket 20 shown in FIG. 12 according to the second example of the present invention. As shown in FIG. 12 to FIG. 14, in this example, a plurality of ribs 230 protrude from a surface of the mounting bracket 20 to cooperate with the carrycot body 10. The ribs 230 are embedded into the carrycot body 10 for reinforcing the connection between the mounting bracket 20 and the carrycot body 10. The plurality of ribs 230 can be arranged on an inner surface of the mounting bracket 20, which is configured to cooperate with the carrycot body 10, and along a periphery of the inner surface. Specifically, each of the ribs 230 includes a connecting plate 231 and an embedding plate 232. The connecting plate 231 is connected to and located between the embedding plate 232 and the inner surface of the mounting bracket 20 to form at least one molding gap 233 between the embedding plate 232 and the inner surface of the mounting bracket 20. The connecting plate 231 can be a structure whose cross section gradually increases in a direction from the bottom portion of the mounting bracket 20 to the upper edge 210 of the mounting bracket 20, i.e., from bottom to top. For example, the connecting plate 231 can be an inverted triangular structure or an inverted trapezoidal structure. However, the present invention is not limited to this example. In other words, in another example, the connecting plate also can be formed in any other shape, such as a rectangular shape, as long as the connecting plate can be stably connected to and located between the embedding plate and the inners surface of the mounting bracket to form the molding gap between the embedding plate and the inner surface of the mounting bracket. The embedding plate 232 can be an arc-shaped plate, a straight plate or a curved plate intersecting with the connecting plate 231. Furthermore, the numbers of the rib, the connecting plate and the embedding plate are not limited to this example. In another example, there can be only one rib protruding from the inner surface of the mounting bracket to cooperate with the carrycot body, and the rib can include one connecting plate and at least one embedding plate connected to the one connecting plate. In this example, the embedding plate 232 is perpendicular to the connecting plate 231. Understandably, in this example, there are ribs 230 protruding from the mounting bracket 20. Therefore, when the carrycot body 10 is combined with the mounting bracket 20 by foam molding, each molding gap 233 between the corresponding embedding plate 232 and the inner surface of the mounting bracket 20 can be filled with the foam material of the carrycot body 10, so that the ribs 230 can be embedded into the carrycot body 10 for reinforcing the connection of the mounting bracket 20 and the carrycot body 10 to make the integral structure formed by the mounting bracket 20 and the carrycot body 10 more stable.

Comparing with the prior art, the carrycot provided by the present invention not only has simple structure but also can be adapted for various carrier frames, such as bases installed on vehicle seats, stroller frames or crib frames. Therefore, the carrycot provided by the present invention is versatile. Furthermore, in the present invention, when the child carrier or the vehicle travels over a bumpy road, the mounting bracket made of hard material can bear the impact force, and the carrycot made of foam material can buffer the impact force for preventing excessive vibration. Furthermore, the carrycot made of foam material also can absorb noise. Thus, the structure of the carrycot provided by the present invention is stable, compact, and lightweight, and the carrycot provided by the present invention can provide a comfortable and safe environment for the child.

Those skilled in the art will readily observe that numerous modifications and alterations of the device may be made as long as they remain within the scope of the appended claims.

## Claims

1. A carrycot (100) comprising:
a carrycot body (10);
a mounting bracket (20) disposed on an outer surface of the carrycot body (10); and
a second connecting assembly (22) disposed on the mounting bracket (20), the second connecting assembly (22) being for detachably connecting the carrycot (100) to a second carrier frame
**characterized in that**
the carrycot further comprises a first connecting assembly (21) disposed on the mounting bracket (20), the first connecting assembly (21) being for detachably connecting the carrycot (100) to a first carrier frame, wherein the second carrier frame is different from the first carrier frame,
the first connecting assembly (21) comprises two engaging slot structures (2A), and a width of a lower portion of each of the engaging slot structure (2A) is greater than a width of an upper portion of each of the engaging slot structures (2A), wherein each of the engaging slot structures (2A) comprises a first portion (211) and a second portion (213) connected to the first portion (211), and an engaging portion (212) is on the second portion (213) for engaging with a portion of a corresponding cooperating component of the first carrier frame, wherein the second portion (213) is located adjacent to a top side of the first portion (211), and a width of the first portion (211) gradually decreases from bottom to top.

2. The carrycot (100) of claim 1, **characterized in that** the mounting bracket (20) is partially embedded into the carrycot body (10).

3. The carrycot (100) of any of the preceding claims, **characterized in that** the second connecting assembly (22) comprises a plurality of fixing blocks (221) and a plurality of engaging components (223), the plurality of fixing blocks (221) protrude from the mounting bracket (20), each of the plurality of engaging components (223) is disposed between corresponding two of the plurality of fixing blocks (221) and for detachably engaging with the second carrier frame, and each of the plurality of fixing blocks (221) is for guiding the corresponding engaging component (223) to detachably engage with the second carrier frame.

4. The carrycot (100) of claim 3, **characterized in that** a slanted surface (222) is on an end of each of the plurality of fixing blocks (221) away from the corresponding engaging component (223) and for guiding the corresponding engaging component (223) to detachably engage with the second carrier frame, and a smooth transition area is between a bottom surface of each of the plurality of fixing blocks (221) and the corresponding slanted surface (222).

5. The carrycot (100) of claim 3, **characterized in that** the plurality of fixing blocks (221) and the mounting bracket (20) are integrally formed with each other.

6. The carrycot (100) of claim 3, **characterized in that** each of the plurality of engaging components (223) is a rod-shaped structure.

7. The carrycot (100) of claim 3, **characterized in that** at least one supporting block (26) protrudes from an end of the mounting bracket (20) away from the plurality of fixing blocks (221), and the at least one supporting block (26) and the plurality of fixing blocks (221) are for supporting the carrycot body (10) on a horizontal surface cooperatively.

8. The carrycot (100) of any of the preceding claims, **characterized in that** at least one first shoulder strap hole (13) and at least one first crotch strap hole (12) are on the carrycot body (10), at least one second shoulder strap hole (24) and at least one second crotch strap hole (23) are on the mounting bracket (20), the at least one first shoulder strap hole (13) and the at least one second shoulder strap hole (24) allow a shoulder strap to pass through and are aligned with each other, and the at least one first crotch strap hole (12) and the at least one second crotch strap hole (23) allow a crotch strap to pass through and are aligned with each other.

9. The carrycot (100) of any of the preceding claims, **characterized in that** at least one first through hole (14) is on the carrycot body (10), at least one second through hole (25) is on the mounting bracket (20), and the at least one first through hole (14) and the at least one second through hole (25) are aligned with each other.

10. The carrycot (100) of any of the preceding claims, further **characterized by** a handle (11) movably disposed on the carrycot body (10).

11. The carrycot (100) of any of the preceding claims, **characterized in that** the carrycot body (10) is made of foam material and/or the mounting bracket (20) is made of PP.

12. A carrycot structure (1000) adapted to be installed on a vehicle seat, the carrycot structure (1000) comprising the carrycot (100) of any of the preceding claims and a second carrier frame being a base (200), and the carrycot (100) being detachably installed on the base (200) by the second connecting assembly (22).

13. The carrycot structure (1000) of claim 12, **characterized in that** a plurality of locking components (201) protrude from the base (200) and are for cooperating with the plurality of engaging components (223) respectively, and a locking slot (202) is on each of the plurality of locking components (201) and for engaging with the corresponding engaging component (223),wherein at least one restraining block (203) protrudes from the base (200) and is located on at least one side of at least one of the plurality of fixing blocks (221), and the at least one restraining block (203) is for abutting against the corresponding fixing block (221) for restraining a movement of the carrycot (100) relative to the base (200).

14. A child carrier (2000) comprising a first carrier frame (300) and the carrycot (100) of any one of claims 1 to 11, and the carrycot (100) being detachably installed on the first carrier frame (300), wherein the first carrier frame (300) is a stroller frame or a crib frame, wherein the first carrier frame (300) comprises a cooperating component (301) for cooperating with the first connecting assembly (21), and the carrycot (100) is detachably installed on the first carrier frame (300) by a cooperation of the first connecting assembly (21) and the cooperating component (301).

## Patentansprüche

1. Babytrageschale (100), umfassend:
einen Babytrageschalenkörper (10);
einen Befestigungsbügel (20), der an einer Außenfläche des Babytrageschalenkörpers (10) angeordnet ist; und
eine zweite Verbindungsanordnung (22), die an dem Befestigungsbügel (20) angeordnet ist, wobei die zweite Verbindungsanordnung (22) dazu dient, die Babytrageschale (100) lösbar mit einem zweiten Tragrahmen zu verbinden
**dadurch gekennzeichnet, dass**
die Babytrageschale des Weiteren eine erste Verbindungsanordnung (21) umfasst, die an dem Befestigungsbügel (20) angeordnet ist, wobei die erste Verbindungsanordnung (21) zum lösbaren Verbinden der Babytrageschale (100) mit einem ersten Tragrahmen dient, wobei sich der zweite Tragrahmen von dem ersten Tragrahmen unterscheidet,
die erste Verbindungsanordnung (21) zwei Eingriffsschlitzstrukturen (2A) umfasst, und eine Breite eines unteren Abschnitts jeder der Eingriffsschlitzstrukturen (2A) größer als eine Breite eines oberen Abschnitts jeder der Eingriffsschlitzstrukturen (2A) ist, wobei jede der Eingriffsschlitzstrukturen (2A) einen ersten Abschnitt (211) und einen zweiten Abschnitt (213) umfasst, der mit dem ersten Abschnitt (211) verbunden ist, und ein Eingriffsabschnitt (212) sich auf dem zweiten Abschnitt (213) befindet, um mit einem Abschnitt einer entsprechenden zusammenwirkenden Komponente des ersten Tragrahmens in Eingriff zu kommen, wobei sich der zweite Abschnitt (213) angrenzend an eine Oberseite des ersten Abschnitts (211) befindet und eine Breite des ersten Abschnitts (211) allmählich von unten nach oben abnimmt.

2. Babytrageschale (100) nach Anspruch 1, **dadurch gekennzeichnet, dass** der Befestigungsbügel (20) teilweise in den Babytrageschalenkörper (10) eingelassen ist.

3. Babytrageschale (100) nach einem der vorhergehenden Ansprüche, **dadurch gekennzeichnet, dass** die zweite Verbindungsanordnung (22) eine Vielzahl von Fixierungsblöcken (221) und eine Vielzahl von Eingriffskomponenten (223) umfasst, wobei die Vielzahl von Fixierungsblöcken (221) von dem Befestigungsbügel (20) vorsteht, jede der Vielzahl von Eingriffskomponenten (223) zwischen zwei entsprechenden der Vielzahl von Fixierungsblöcken (221) und zum lösbaren Eingriff mit dem zweiten Tragrahmen angeordnet ist, und jeder der Vielzahl von Fixierungsblöcken (221) zum Führen der entsprechenden Eingriffskomponente (223) dient, um mit dem zweiten Tragrahmen lösbar in Eingriff zu kommen.

4. Babytrageschale (100) nach Anspruch 3, **dadurch gekennzeichnet, dass** eine abgeschrägte Fläche (222) an einem von der entsprechenden Eingriffskomponente (223) entfernten Ende jedes der Vielzahl von Fixierungsblöcken (221) und zum Führen der entsprechenden Eingriffskomponente (223) vorhanden ist, um lösbar mit dem zweiten Tragrahmen in Eingriff zu kommen, und ein glatter Übergangsbereich zwischen einer Bodenfläche jedes der Vielzahl von Fixierungsblöcken (221) und der entsprechenden abgeschrägten Fläche (222) vorhanden ist.

5. Babytrageschale (100) nach Anspruch 3, **dadurch gekennzeichnet, dass** die Vielzahl von Fixierungsblöcken (221) und der Befestigungsbügel (20) einstückig miteinander ausgebildet sind.

6. Babytrageschale (100) nach Anspruch 3, **dadurch gekennzeichnet, dass** jede der Vielzahl von Eingriffskomponenten (223) eine stabförmige Struktur ist.

7. Babytrageschale (100) nach Anspruch 3, **dadurch gekennzeichnet, dass** mindestens ein Stützblock (26) von einem Ende des Befestigungsbügels (20) weg von der Vielzahl von Fixierungsblöcken (221) vorsteht, und der mindestens eine Stützblock (26) und die Vielzahl von Fixierungsblöcken (221) dazu dienen, den Babytrageschalenkörper (10) auf einer horizontalen Fläche zusammenwirkend zu stützen.

8. Babytrageschale (100) nach einem der vorhergehenden Ansprüche, **dadurch gekennzeichnet, dass** mindestens ein erstes Schultergurtloch (13) und mindestens ein erstes Schrittgurtloch (12) an dem Babytrageschalenkörper (10) vorhanden sind, mindestens ein zweites Schultergurtloch (24) und mindestens ein zweites Schrittgurtloch (23) an dem Befestigungsbügel (20) vorhanden sind, das mindestens eine erste Schultergurtloch (13) und das mindestens eine zweite Schultergurtloch (24) den Durchgang eines Schultergurtes ermöglichen und zueinander ausgerichtet sind, und das mindestens eine erste Schrittgurtloch (12) und das mindestens eine zweite Schrittgurtloch (23) den Durchgang eines Schrittgurtes ermöglichen und zueinander ausgerichtet sind.

9. Babytrageschale (100) nach einem der vorhergehenden Ansprüche, **dadurch gekennzeichnet, dass** mindestens ein erstes Durchgangsloch (14) an dem Babytrageschalenkörper (10) vorhanden ist, mindestens ein zweites Durchgangsloch (25) an dem Befestigungsbügel (20) vorhanden ist, und das mindestens eine erste Durchgangsloch (14) und das mindestens eine zweite Durchgangsloch (25) zueinander ausgerichtet sind.

10. Babytrageschale (100) nach einem der vorhergehenden Ansprüche, des Weiteren **gekennzeichnet durch** einen Griff (11), der beweglich an dem Babytrageschalenkörper (10) angeordnet ist.

11. Babytrageschale (100) nach einem der vorhergehenden Ansprüche, **dadurch gekennzeichnet, dass** der Babytrageschalenkörper (10) aus Schaumstoffmaterial und/oder der Befestigungsbügel (20) aus PP gefertigt ist.

12. Babytrageschalenstruktur (1000), die dazu geeignet ist, auf einem Fahrzeugsitz installiert zu werden, wobei die Babytrageschalenstruktur (1000) die Babytrageschale (100) nach einem der vorhergehenden Ansprüche und einen zweiten Tragrahmen umfasst, der eine Basis (200) ist, und wobei die Babytrageschale (100) durch die zweite Verbindungsanordnung (22) abnehmbar auf der Basis (200) installiert ist.

13. Babytrageschalenstruktur (1000) nach Anspruch 12, **dadurch gekennzeichnet, dass** eine Vielzahl von Verriegelungskomponenten (201) von der Basis (200) vorsteht und dazu dient, jeweils mit der Vielzahl von Eingriffselementen (223) zusammenzuwirken, und ein Verriegelungsschlitz (202) an jedem der Vielzahl von Verriegelungselementen (201) vorhanden ist und dazu dient, mit der entsprechenden Eingriffskomponente (223) in Eingriff zu kommen, wobei mindestens ein Rückhalteblock (203) von der Basis (200) vorsteht und sich auf mindestens einer Seite von mindestens einem der Vielzahl von Fixierungsblöcken (221) befindet, und der mindestens eine Rückhalteblock (203) dazu dient, an dem entsprechenden Fixierungsblock (221) anzuliegen, um eine Bewegung der Babytrageschale (100) relativ zu der Basis (200) zu begrenzen.

14. Kindertransporter (2000), umfassend einen ersten Tragrahmen (300) und die Babytrageschale (100) nach einem der Ansprüche 1 bis 11, und wobei die Babytrageschale (100) abnehmbar auf dem ersten Tragrahmen (300) installiert ist, wobei der erste Tragrahmen (300) ein Kinderwagenrahmen oder ein Kinderbettrahmen ist, wobei der erste Tragrahmen (300) eine zusammenwirkende Komponente (301) zum Zusammenwirken mit der ersten Verbindungsanordnung (21) umfasst und die Babytrageschale (100) durch ein Zusammenwirken der ersten Verbindungsanordnung (21) und der zusammenwirkenden Komponente (301) abnehmbar auf dem ersten Tragrahmen (300) installiert ist.

## Revendications

1. Nacelle (100) comprenant :
un corps de nacelle (10) ;
une console de montage (20) qui est disposée sur une surface externe du corps de nacelle (10) ; et
un second ensemble de connexion (22) qui est disposé sur la console de montage (20), le second ensemble de connexion (22) ayant pour fonction de connecter de façon amovible la nacelle (100) à un second châssis de support,
**caractérisée en ce que** :
la nacelle comprend en outre un premier ensemble de connexion (21) qui est disposé sur la console de montage (20), le premier ensemble de connexion (21) ayant pour fonction de connecter de façon amovible la nacelle (100) à un premier châssis de support, dans laquelle le second châssis de support est différent du premier châssis de support ; et
le premier ensemble de connexion (21) comprend deux structures à fente(s) d'engagement (2A), et une largeur d'une partie inférieure de chacune des structures à fente(s) d'engagement (2A) est plus grande qu'une largeur d'une partie supérieure de chacune des structures à fente(s) d'engagement (2A), dans laquelle chacune des structures à fente(s) d'engagement (2A) comprend une première partie (211) et une seconde partie (213) qui est connectée à la première partie (211), et une partie d'engagement (212) est prévue sur la seconde partie (213) pour être engagée avec une partie d'un composant de coopération correspondant du premier châssis de support, et dans laquelle la seconde partie (213) est localisée de manière à être adjacente à un côté de sommet de la première partie (211), et une largeur de la première partie (211) diminue de façon progressive depuis la base jusqu'au sommet.

2. Nacelle (100) selon la revendication 1, **caractérisée en ce que** la console de montage (20) est partiellement intégrée à l'intérieur du corps de nacelle (10).

3. Nacelle (100) selon l'une quelconque des revendications précédentes, **caractérisée en ce que** le second ensemble de connexion (22) comprend une pluralité de blocs de fixation (221) et une pluralité de composants d'engagement (223), les blocs de fixation de la pluralité de blocs de fixation (221) font saillie depuis la console de montage (20), chacun de la pluralité de composants d'engagement (223) est disposé entre deux blocs correspondants de la pluralité de blocs de fixation (221) et a pour fonction d'être engagé de façon amovible avec le second châssis de support, et chacun de la pluralité de blocs de fixation (221) a pour fonction de guider le composant d'engagement correspondant (223) de telle sorte qu'il soit engagé de façon amovible avec le second châssis de support.

4. Nacelle (100) selon la revendication 3, **caractérisée en ce qu'**une surface inclinée (222) est prévue sur une extrémité de chacun de la pluralité de blocs de fixation (221) à distance du composant d'engagement correspondant (223) et a pour fonction de guider le composant d'engagement correspondant (223) de telle sorte qu'il soit engagé de façon amovible avec le second châssis de support, et une zone de transition sans discontinuités est prévue entre une surface de base de chacun de la pluralité de blocs de fixation (221) et la surface inclinée correspondante (222).

5. Nacelle (100) selon la revendication 3, **caractérisée en ce que** les blocs de fixation de la pluralité de blocs de fixation (221) et la console de montage (20) sont formés d'un seul tenant en association mutuelle.

6. Nacelle (100) selon la revendication 3, **caractérisée en ce que** chacun de la pluralité de composants d'engagement (223) présente une structure en forme de barre.

7. Nacelle (100) selon la revendication 3, **caractérisée en ce qu'**au moins un bloc de support (26) fait saillie depuis une extrémité de la console de montage (20) à distance de la pluralité de blocs de fixation (221), et l'au moins un bloc de support (26) et la pluralité de blocs de fixation (221) ont pour fonction de supporter le corps de nacelle (10) sur une surface horizontale de façon coopérative.

8. Nacelle (100) selon l'une quelconque des revendications précédentes, **caractérisée en ce qu'**au moins un premier trou de sangle d'épaule (13) et au moins un premier trou de sangle d'entrejambe (12) sont prévus sur le corps de nacelle (10), au moins un second trou de sangle d'épaule (24) et au moins un second trou de sangle d'entrejambe (23) sont prévus sur la console de montage (20), l'au moins un premier trou de sangle d'épaule (13) et l'au moins un second trou de sangle d'épaule (24) permettent le passage au travers d'eux-mêmes d'une sangle d'épaule et sont alignés l'un avec l'autre, et l'au moins un premier trou de sangle d'entrejambe (12) et l'au moins un second trou de sangle d'entrejambe (23) permettent le passage au travers d'eux-mêmes d'une sangle d'entrejambe et sont alignés l'un avec l'autre.

9. Nacelle (100) selon l'une quelconque des revendications précédentes, **caractérisée en ce qu'**au moins un premier trou traversant (14) est prévu sur le corps de nacelle (10), au moins un second trou traversant (25) est prévu sur la console de montage (20), et l'au moins un premier trou traversant (14) et l'au moins un second trou traversant (25) sont alignés l'un avec l'autre.

10. Nacelle (100) selon l'une quelconque des revendications précédentes, **caractérisée en outre par** une poignée (11) qui est disposée de façon mobile sur le corps de nacelle (10).

11. Nacelle (100) selon l'une quelconque des revendications précédentes, **caractérisée en ce que** le corps de nacelle (10) est réalisé à partir d'un matériau alvéolaire et/ou la console de montage (20) est réalisée à partir de polypropylène (PP).

12. Structure de nacelle (1000) adaptée pour être installée sur un siège de véhicule, la structure de nacelle (1000) comprenant la nacelle (100) selon l'une quelconque des revendications précédentes et un second châssis de support qui est une base (200), et la nacelle (100) étant installée de façon amovible sur la base (200) au moyen du second ensemble de connexion (22).

13. Structure de nacelle (1000) selon la revendication 12, **caractérisée en ce que** des composants d'une pluralité de composants de blocage (201) font saillie depuis la base (200) et ont respectivement pour fonction de coopérer avec les composants de la pluralité de composants d'engagement (223), et une fente de blocage (202) est prévue sur chacun de la pluralité de composants de blocage (201) et a pour fonction d'être engagée avec le composant d'engagement correspondant (223), dans laquelle au moins un bloc de limitation (203) fait saillie depuis la base (200) et est localisé sur au moins un côté d'au moins l'un de la pluralité de blocs de fixation (221), et l'au moins un bloc de limitation (203) a pour fonction de venir en butée contre le bloc de fixation correspondant (221) pour limiter un déplacement de la nacelle (100) par rapport à la base (200).

14. Porte-bébé (2000) comprenant un premier châssis de support (300) et la nacelle (100) selon l'une quelconque des revendications 1 à 11, et la nacelle (100) étant installée de façon amovible sur le premier châssis de support (300), dans lequel le premier châssis de support (300) est un châssis de poussette ou un châssis de berceau, et dans lequel le premier châssis de support (300) comprend un composant de coopération (301) dont la fonction est de coopérer avec le premier ensemble de connexion (21), et la nacelle (100) est installée de façon amovible sur le premier châssis de support (300) au moyen d'une coopération du premier ensemble de connexion (21) et du composant de coopération (301).
